# EUROPÄISCHE PATENTANMELDUNG

(11) **EP 1 335 324 A2**
(43) Veröffentlichungstag der Anmeldung: **13.08.2003**
(21) Anmeldenummer: 03000362.8
(22) Anmeldetag: 10.01.2003
(51) Int. Cl.: G07B 15/00, G07F 7/00, G07F 7/08

(54) **Einrichtung zur Ermittlung von Nutzungsgebühren**

(30) Priorität: 07.02.2002 DE 10205162
(71) Anmelder: DaimlerChrysler AG, 70567 Stuttgart (DE)
(72) Erfinder: Beier, Wolfgang, 71263 Weil der Stadt (DE)

(57) **Zusammenfassung**

Die Erfindung betrifft eine Einrichtung (20) in einem Fahrzeug zur fahrzeuginternen elektronischen Ermittlung der Nutzungsgebühr für gebührenpflichtige Wegstrecken, die von dem Fahrzeug zurückgelegt werden, mit Mitteln zur Positionsbestimmung des Fahrzeugs (30), mit einem Speicher (40) zur Speicherung von Daten eines Wegenetzes, die zugeordnete Gebührendaten umfassen, mit einer Recheneinrichtung zur Identifizierung der Benutzung gebührenpflichtiger Wegstrecken durch das Fahrzeug und zur Ermittlung der jeweiligen Nutzungsgebühr, mit einer Chip-Karte (10) zur Speicherung der ermittelten Nutzungsgebühr. Erfindungsgemäß umfasst die Chip-Karte (10) die Recheneinrichtung zur Identifizierung der Benutzung gebührenpflichtiger Wegstrecken durch das Fahrzeug und zur Ermittlung der jeweiligen Nutzungsgebühr.

## Beschreibung

Die Erfindung betrifft eine Einrichtung in einem Fahrzeug zur fahrzeuginternen elektronischen Ermittlung von Nutzungsgebühren gemäß dem Oberbegriff des Anspruchs 1.

In der EP 0 701 722 B1 wird eine solche Einrichtung zur Ermittlung von Nutzungsgebühren beschrieben. Es werden bordautonom Nutzungsgebühren für vom Fahrzeug zurückgelegte Wegstrecken ermittelt und auf einer Chip-Karte verbucht. Zur Überwachung auf unautorisierte Manipulation werden die einzelnen Komponenten des Gerätes in einem einzigen Gehäuse untergebracht, das verplombt wird. Die Softwarekomponenten der Einrichtung werden mit geheimen Datenkennungen versehen, so dass der Austausch gegen eine manipulierte Softwarekomponente erkannt werden kann. Die Softwarekomponenten werden in verschlüsselter Form eingesetzt.

Aufgabe der Erfindung ist es, eine Einrichtung zur Ermittlung von Nutzungsgebühren zu schaffen, die einfach vor Manipulationen geschützt werden kann.

Die Erfindung löst diese Aufgabe durch die Bereitstellung einer Einrichtung zur Ermittlung von Nutzungsgebühren des Anspruchs 1. Die abhängigen Ansprüche betreffen vorteilhafte Aus- und Weiterbildungen der Erfindung.

Die Ermittlung der Nutzungsgebühren erfolgt dadurch, dass jedem gebührenpflichtigen Streckenabschnitt eines gesamten, in einer fahrzeugseitigen elektronischen Speichereinrichtung abgespeicherten Wegenetzes in Form einer digitalen Karte ein Strecken-Gebührenparameter zugeordnet ist, der den für diesen Abschnitt fälligen Nutzungsgebührenanteil repräsentiert. Die Mittel zur Positionsbestimmung des Fahrzeuges erlauben die Bestimmung der geographischen Position des Fahrzeuges, z. B. mittels GPS. Unter Verwendung der aktuellen geographischen Position des Fahrzeuges und vorteilhafterweise auch vergangener geographischer Positionen des Fahrzeuges erfolgt eine Zuordnung der zurückgelegten Wegstrecke des Fahrzeuges zu gebührenpflichtigen Streckenabschnitten in einer Recheneinrichtung. In der Recheneinrichtung wird außerdem anhand der in der digitalen Karte gespeicherten Gebührenparameter die jeweilige Nutzungsgebühr für die befahrene Wegstrecke ermittelt und auf einer Chip-Karte gespeichert.

Hauptgedanke der Erfindung ist, die Recheneinrichtung, in der die Identifizierung der zurückgelegten gebührenpflichtigen Wegstrecken erfolgt und die Nutzungsgebühr für diese Wegstrecken ermittelt wird, auf der Chip-Karte zu realisieren. Die Realisierung der Recheneinrichtung auf der Chip-Karte hat den Vorteil, dass der Betreiber des Gebührenerfassungssystems die wesentlichen Funktionalitäten zur Gebührenerfassung auf der Chip-Karte zusammenfassen kann und über eine datentechnische Verbindung der Chip-Karte mit weiteren im Fahrzeug verbauten Einheiten den notwendigen Datenaustausch mit den im Fahrzeug verbauten Einheiten realisieren kann. Vom Fahrzeug werden Daten an die Chip-Karte geliefert bzw. von der Chip-Karte empfangen. Im Fahrzeug werden dann Daten gespeichert und/oder über die Kommunikationseinrichtung gesendet und/oder empfangen. Die datentechnische Verbindung kann z. B. durch eine Kartenlese-/schreibeinrichtung und/oder eine drahtlose Verbindung erfolgen. Die Chip-Karte kann fest in ein Fahrzeuggerät eingebaut sein. Die Chip-Karte kann als leicht entnehmbare portable Chip-Karte ausgebildet sein. Die leicht entnehmbare Chip-Karte hat den Vorteil, dass sie dem Fahrer und/oder Spediteur als Chip-Karte getrennt von Einrichtungen im Fahrzeug verkauft oder ausgegeben werden kann und dass der Fahrer sie mit sich führen kann, um z. B. ein Guthaben darauf aufzuladen.

Durch die Konzentration der Funktionalität der Identifizierung der Benutzung gebührenpflichtiger Wegstrecken durch das Fahrzeug und der Ermittlung der jeweiligen Nutzungsgebühr auf der Chip-Karte ist die Sicherungsdomäne des Betreibers des Gebührenerfassungssystems im Fahrzeug auf die Chip-Karte beschränkt. So ist eine Manipulation der Software erschwert. Eine Manipulation könnte z. B. zu dem Zweck ausgeführt werden, keine Gebühren zu entrichten, aber bei Kontrollen eine Einrichtung zur Gebührenermittlung zu haben, die nach außen so funktioniert, als seien ordnungsgemäß Gebühren entrichtet worden.

Ein Vorteil der Erfindung ist, dass die Kosten eines Nutzungsgebührenerhebungssystems verringert werden können, da existierende Einrichtungen des Fahrzeugs, wie z. B. Sensoren, Kommunikationseinrichtungen und/oder Recheneinrichtungen, zur Nutzungsabrechnung mitverwendet werden können.

Ein weiterer Vorteil der Erfindung ist, dass Geräte zur Straßengebührenerfassung für neue Anwendungen der Telematik, z. B. für Dienste geöffnet werden können. Dienste, z. B. FCD-Verkehrsdatenerfassung, können dann z. B. auf dem Gerät zur Gebührenerfassung mit realisiert werden. Dies spart Kosten, da für FCD (Floating Car Data) oder andere Dienste dann kein eigenes Gerät ins Fahrzeug eingebaut werden muss.

Es ist möglich, auf der Chip-Karte ein Wertguthaben zu speichern, von dem die Nutzungsgebühren dann abgebucht werden. Es ist auch möglich, auf der Chip-Karte eine Kontoabwicklung zu realisieren. Die Chip-Karte kann als eine Art Kreditkarte ausgebildet sein, die die Abbuchung von einem Konto realisiert. Die Kommunikation mit einer Zentrale kann falls nötig z. B. über eine im Fahrzeug vorhandene Kommunikationseinrichtung abgewickelt werden. Es ist möglich, jede ermittelte Gebühr einzeln an die Zentrale zu übertragen und/oder die Gebühren bis zu einem bestimmten Betrag zu addieren und dann den gesammelten Betrag an die Zentrale zur Abrechnung zu übertragen. Bei einer Kontrolle wird im Fahrzeuggerät der Beleg über die letzte erfolgte Zahlung abgefragt. Wird in der Chip-Karte ein Beleg erzeugt, so wird in der Chip-Karte nicht manipulierbar eine Gegenbuchung vorgenommen.

In einer vorteilhaften Weiterbildung der Erfindung erfolgt in der Recheneinrichtung auf der Chip-Karte eine Überwachung auf unautorisierte Manipulation der Einrichtung. Dies ist besonders von Vorteil, wenn bereits im Fahrzeug verbaute Einrichtungen, wie z. B. die Mittel zur Positionsbestimmung des Fahrzeugs und/oder die Kommunikationseinrichtungen, für die Gebührenermittlung mitverwendet werden. Durch die Mitverwendung ist nämlich z. B. die Realisierung in einem verplombten Gehäuse nicht mehr möglich. Der Betreiber des Gebührenerfassungssystems hat auch keinen Einfluss auf die Herstellung und Sicherung vor Manipulation der im Fahrzeug sowieso verbauten und zur Gebührenermittlung mitverwendeten Einrichtungen. Durch die Konzentration der Überwachung auf unautorisierte Manipulation auf der Chip-Karte, ist diese Funktionalität auf einer Einrichtung realisiert, die vom Betreiber des Gebührenerfassungssystems hergestellt und vertrieben werden kann. Vorteilhaft ist weiter, dass die Sicherungsdomäne des Betreibers des Gebührenerfassungssystems im Fahrzeug auf die Chip-Karte beschränkt ist. Auf diese Weise wird ein Sicherungskonzept realisiert, das Manipulationen an den Sensoren und/oder Kommunikationseinrichtungen, der Daten sowie der Steuerung dazwischen erkennt. Diese Erkennung kann sich auf Einrichtungen beziehen, die bereits im Fahrzeug verbaut sind und/oder nicht unter der Kontrolle des Betreibers des Nutzungsgebührenerfassungssystems stehen. Diese Erkennung kann auch erfolgen, wenn die Manipulation außerhalb von gebührenpflichtigen Strecken vorgenommen wird.

Im Zuge der zunehmenden Verbreitung von Nutzungsgebührenermittlungssystemen ist es zunehmend sinnvoll, die dafür nötigen Einrichtungen schon bei der Herstellung der Fahrzeuge und der Fahrzeugelektronik zu berücksichtigen. Ein Vorteil der Erfindung besteht darin, das die notwendigen Einrichtungen für die Ermittlung der Fahrzeugposition und Fahrzeugbewegung bereits direkt unter Kontrolle des Fahrzeugherstellers in die Fahrzeuge eingebaut werden können. Auch die Kommunikationseinrichtungen kann der Fahrzeughersteller definieren und integrieren.

Änderungen der in der digitalen Karte gespeicherten Gebührendaten für die jeweiligen Streckenabschnitte können durchgeführt werden, indem Aktualisierungen zu diesen Daten von einer Zentrale an die Einrichtung im Fahrzeug übermittelt werden und im Speicher dort abgespeichert werden. Es kann auf diese Weise erforderlichenfalls das im Speicher abgespeicherte Wegenetz geändert werden. Als Empfängereinheit sind im Fahrzeug verbaute Kommunikationseinrichtungen wie z. B. Radio oder Mobilfunkeinrichtung verwendbar. Die Nutzungsgebühr hängt vorteilhafterweise auch vom Fahrzeug selbst ab, z. B. der Fahrzeugklasse, dem zulässigen Gesamtgewicht, der Anzahl der Achsen, der Beladung, der Fahrzeuggeschwindigkeit. Die Nutzungsgebühr kann außerdem z. B. von der Tageszeit abhängen, an dem die Strecke benutzt wird. Zur Erfassung dieser Parameter werden im Fahrzeug vorhandene geeignete Sensoren verwendet. Die Gebührendaten können ebenfalls sog. Umfeld-Gebührendaten umfassen, die Daten für das Fahrumfeld des Fahrzeugs, z. B. die Verkehrsdichte und/oder die Emissionsbelastung, umfassen. Die Höhe der Nutzungsgebühr hängt vorteilhafterweise auch von diesen Parametern ab. Daten für das Fahrumfeld des Fahrzeugs können von einer Zentrale empfangen werden und/oder mittels geeigneter Sensoren am Fahrzeug erfasst werden.

Die von der Zentrale empfangenen Änderungen der digitalen Karte, insbesondere die Gebührenparameter betreffend, werden von der Zentrale mit einer Signatur versehen. Die Signatur wird von der Chip-Karte geprüft. Dadurch ist gewährleistet, dass die die Gebühr betreffenden Daten nicht manipuliert werden können. Bei der Verwendung von symmetrischen Verschlüsselungsverfahren sind die Daten zugleich verschlüsselt, d. h. nicht lesbar, und signiert, d. h. nicht manipulierbar und vom richtigen, angegebenen Absender. Bei der Verwendung von asymmetrischen Verschlüsselungsverfahren lässt sich die Signatur, d. h. Schutz vor Manipulation und von falschen Absendern, von der Verschlüsselung getrennt realisieren, d. h. es reicht im erwähnten Fall, die Daten zu signieren. Bei der Übertragung von der Zentrale ins Fahrzeug heißt das, dass die Zentrale die Daten mit ihrem eigenen privaten Schlüssel signiert und die Chip-Karte die Signatur mit dem öffentlichen Schlüssel der Zentrale prüft. Hierfür fordert die Chip-Karte die Fahrzeugeinrichtung wenn nötig auf, Ausschnitte der Daten der Gebührenregeln in die Chip-Karte zu laden. Durch eine solche Realisierung stellt die Chip-Karte eine Manipulation der im Speicher im Fahrzeug gespeicherten Daten fest.

In einer vorteilhaften Ausführung der Erfindung speichert die Chip-Karte im Falle einer erkannten unautorisierten Manipulation diagnostizierte Daten in einem weiteren Speicher im Fahrzeug ab. Diese Daten werden im Falle einer Kontrolle, ggf. auf drahtlose Anfrage einer Kontrolleinrichtung, ausgegeben. Dies hat den Vorteil, die Fälle der versuchten Manipulation dokumentieren zu können. Eine Manipulation wird z. B. durch Vergleich der Zeitstempel auf Anfragen vom Fahrzeug an die Chip-Karte erkannt. Stimmt der Abstand zwischen den Anfragen nicht, so wird eine Manipulation erkannt und diagnostizierte Daten werden im weiteren Speicher abgelegt. Auf diese Weise kann überprüft werden, ob die Chip-Karte von außerhalb, d. h. von den Einrichtungen im Fahrzeug richtig bedient wird.

In einer vorteilhaften Weiterbildung der Erfindung werden von der Chip-Karte aufeinanderfolgende Fahrzeugpositionen anhand von Position, Zeit und/oder Geschwindigkeit auf Plausibilität überprüft. Kommen Positionssprünge vor oder sind Positionen auf sonstige Weise unplausibel, wird eine Manipulation erkannt und ein Datensatz mit diagnostizierten Daten im weiteren Speicher abgelegt.

Vorteilhafterweise werden die diagnostizierten Daten zu erkannten Manipulationen in einem weiteren Speicher im Fahrzeug abgelegt und zum Schutz vor Manipulation werden die abgelegten Datensätze von der Chip-Karte nummeriert und signiert. Zum Signieren verwendet die Chip-Karte ihren eigenen privaten Schlüssel.

Diagnostizierte Daten umfassen z. B. Art und Zeitpunkt der Manipulation, Stelle der Manipulation, ggf. einen Fehlercode. Diagnostizierte Daten können ggf. Aufschluss über die Ursachen von Fehlern oder über Manipulationen geben.

Bei Kontrollen werden die Antworten auf die Kontrollen von der Chip-Karte erzeugt. Die Chip-Karte gibt als Antwort auf eine Kontrollanfrage die aktuelle Fahrzeugposition, den letzten Zeitstempel, den sie vom Fahrzeug erhalten hat und die Nummer des letzten im weiteren Speicher abgelegten Datensatzes an. Vorteilhafterweise signiert die Chip-Karte diese Daten, so dass die Kontrollstelle die Möglichkeit hat, diese Daten auf Echtheit zu überprüfen. Die Kontrollstelle verwendet hierfür bei Verwendung eines asymmetrischen Verfahrens den öffentlichen Schlüssel der Chip-Karte. Der Kontrollstelle ist durch die Antwort die Nummer des letzten im weiteren Speicher abgelegten Datensatzes bekannt, so dass sie diesen gezielt abfragen kann. Außerdem kann die Kontrollstelle feststellen, ob der Chip-Karte von den Fahrzeugeinrichtungen die korrekte Position und Uhrzeit zur Verfügung gestellt wurde.

Es ist vorteilhaft, die Erfindung so auszuführen, dass erkannt wird, wenn die Fahrzeugpositionsbestimmung über eine längere Zeit nicht möglich ist. Zu diesem Zweck meldet die Fahrzeugeinrichtung an die Chip-Karte, wenn die Positionsbestimmung über einen längeren Zeitraum nicht erfolgt, z. B. weil der GPS-Empfänger nicht richtig arbeiten kann, und bei Überschreiten eines Zeitlimits veranlasst die Chip-Karte, dass ein Datensatz im weiteren Speicher abgelegt wird.

Es ist vorteilhaft, die Erfindung so auszuführen, dass erkannt wird, wenn es über eine längere Zeit nicht möglich ist, mit der Zentrale zu kommunizieren. Zu diesem Zweck meldet die Fahrzeugeinrichtung an die Chip-Karte, wenn die Kommunikation über einen längeren Zeitraum nicht möglich ist, und bei Überschreiten eines Zeitlimits veranlasst die Chip-Karte, dass ein Datensatz im weiteren Speicher abgelegt wird.

Die Rechenzeit auf der Chip-Karte ist so kurz, dass das Vortäuschen einer Chip-Karte durch Einrichtungen außerhalb des Fahrzeuges aufgrund der Rechenzeit nicht möglich ist.

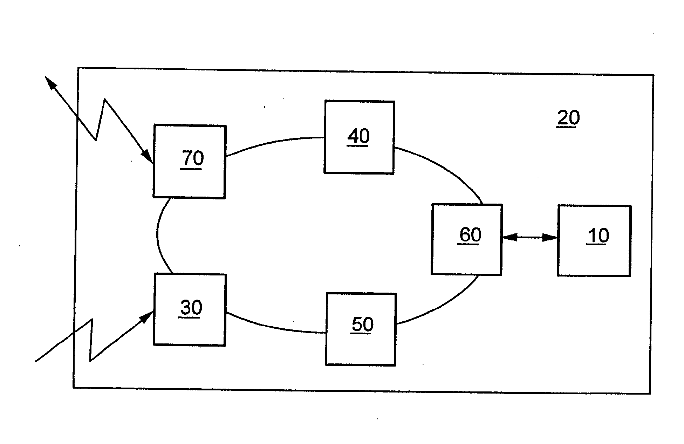

Ein bevorzugte Ausführungsbeispiel der Erfindung wird anhand der einzigen Zeichnung nachfolgend beschrieben. Es zeigt in schematischer Darstellung,
- **Fig.**: eine Einrichtung zur Ermittlung von Nutzungsgebühren in einem Fahrzeug.

Die in der Fig. dargestellte Einrichtung 20 umfasst eine Chip-Karte 10, einen GPS-Empfänger 30, einen Speicher 40, einen weiteren Speicher 50, einen Chipkartenleser/Chipkartenschreiber 60) und eine Sende-/Empfangseinrichtung 70, die z. B. als Mobiltelefon ausgebildet ist. Der Speicher 40 und der weitere Speicher 50 können auch als ein einziger Speicher ausgebildet sein. Die Speicher 40 und 50 bzw. der Speicher, der 40 und 50 zusammenfasst kann auch für andere Funktionalitäten, Anwendungen, Systeme im Fahrzeug genutzt werden. Die Einrichtungen im Fahrzeug außerhalb der Chip-Karte, die die Einrichtungen 30, 40, 50, 60 und 70 umfassen, können untereinander diskret durch Leitungen verbunden und/oder durch einen Datenbus vernetzt sein. Es sind auch Mischformen der Topologien, diskrete Verbindung und/oder Datenbus, denkbar.

Auf der Recheneinrichtung der Chip-Karte 10 läuft die Erkennung ab, ob und wenn ja welche Gebühr zu zahlen ist. Zusätzlich wird überprüft, ob die Einrichtungen außerhalb der Chip-Karte 10 diese richtig bedienen. Dazu überprüft die Chip-Karte 10 in aufeinanderfolgenden Anfragen von außen den Zeitstempel der Anfragen, ob die Zeitstempel den richtigen Zeitabstand haben.

Wenn der Abstand nicht stimmt, so wird ein Datensatz im weiteren Speicher 50 abgelegt. Weiter überprüft die Chip-Karte 10 die von der Einrichtung 30 angebotenen Messwerte der Position und die angebotenen Messwerte der Geschwindigkeit, ob diese zusammenpassen. Es kann also kein Positionssprung vorkommen, ohne die entsprechende und plausible Geschwindigkeit und Zeitdifferenz dazu.

Die Chip-Karte fordert wenn nötig die außerhalb der Chip-Karte im Fahrzeug verbauten Einrichtungen auf, Ausschnitte der Daten des Regelwerkes der Nutzungsgebührenerfassung, die im Speicher 40 gespeichert sind und insbesondere Gebührendaten umfassen, in die Chip-Karte 10 zu laden. Dabei kontrolliert die Chip-Karte 10 die Signatur dieser Datensätze, die die Zentrale signiert hat und in dieser Form ins Fahrzeug überträgt. Die Einrichtung im Fahrzeug außerhalb der Chip-Karte 10, die manipulationsgefährdet ist, kann diese Daten somit nicht fälschen. Wenn die Signaturen falsch sind oder wenn die Zeittoleranz auf eine Antwort überschritten wird, so erzeugt die Chip-Karte 10 einen Datensatz für den weiteren Speicher 50.

Die Chip-Karte 10 erzeugt laufend Antworten für eine Kontrolle und benutzt dabei neben dem letzten Zahlungsbeleg den letzten angebotenen Zeitstempel und die zuletzt angebotene Position des Fahrzeuges. Dieser Datensatz ist von der Chip-Karte 10 signiert. Damit hat die Kontrollstelle die Möglichkeit zu kontrollieren, ob die Einrichtungen im Fahrzeug die richtige Zeit und die richtige Position an die Chip-Karte 10 übermittelt haben. Wenn die Chip-Karte 10 einen Datensatz für den Speicher 50 produziert, dann wird dieser von der Chip-Karte 10 fortlaufend nummeriert und im Speicher 50 gespeichert.

Innerhalb des Datensatzes, den die Chip-Karte 10 an die Kontrollstelle übermittelt, ist auch die laufende Nummer des letzten Datensatz für den Speicher 50 enthalten, so dass die Kontrollstelle diesen explizit anfragen kann.

Wenn die Positionsbestimmung nicht möglich ist weil z.B. der GPS-Empfänger 30 nicht richtig arbeiten kann, dann melden die Einrichtungen im Fahrzeug auf die oben erwähnte Anfrage der Chip-Karte 10 dieses und die Chip-Karte 10 vergleicht die Dauer und die Bewegung dazu und erzeugt ggf. einen Datensatz für den Speicher 50.

Wenn die Einrichtungen im Fahrzeug Daten entweder nicht von der Zentrale abholen können bzw. nicht dort abgeben können, dann wird das der Chip-Karte 10 übermittelt. Die Chip-Karte 10 ermittelt die dafür vergangene Zeit. Sollte mit der vergangenen zeit eine Toleranz überschritten werden, wird ein entsprechender Datensatz für den Speicher 50 generiert.
Diese Funktionen zusammen ergeben immer die Möglichkeit, eine vom Normallauf abweichende Funktion der Einrichtungen im Fahrzeug an der nächsten Kontrollstelle zu erkennen und dort entsprechend zu reagieren.

Auf diese Weise kann verhindert werden, dass bei nur stichprobenartig vorgenommenen Kontrollen Zahlungen nur dann vorgenommen werden, wenn kontrolliert wird.

Der GPS-Empfänger 30, der Speicher 40, der weitere Speicher 50 und die Sende-/Empfangseinrichtung 70 können auch von weiteren Funktionalitäten im Fahrzeug genutzt werden. Das Positionserfassungssystem 30 kann z. B. von einer Navigationsanlage zur Zielführung und/oder von einem Radschlupfregelsystem mitverwendet werden. Wenn in ein Fahrzeug, in das eine Einrichtung zur Gebührenermittlung eingebaut werden soll, bereits über z. B. ein GPS 30 verfügt - für die Zielführung und/oder das Radschlupfregelsystem - so kann das GPS 30 für die Gebührenermittlung mitverwendet werden. Die Sende-/Empfangseinrichtung 70 kann vom Fahrer direkt zum Telefonieren und/oder für Datendienste verwendet werden. Die Datendienste können dann auch in Verbindung mit der Navigation und/oder sonstigen Fahrerassistenzsystemen, z. B. zur Fahrdynamikregelung Verwendung finden.

## Patentansprüche

1. Einrichtung (20) in einem Fahrzeug zur fahrzeuginternen elektronischen Ermittlung der Nutzungsgebühr für gebührenpflichtige Wegstrecken, die von dem Fahrzeug zurückgelegt werden,
mit Mitteln zur Positionsbestimmung des Fahrzeugs (30), mit einem Speicher (40) zur Speicherung von Daten eines Wegenetzes, die zugeordnete Gebührendaten umfassen,
mit einer Recheneinrichtung zur Identifizierung der Benutzung gebührenpflichtiger Wegstrecken durch das Fahrzeug und zur Ermittlung der jeweiligen Nutzungsgebühr,
mit einer Chip-Karte (10) zur Speicherung der ermittelten Nutzungsgebühr,
**dadurch gekennzeichnet,**
**dass** die Chip-Karte (10) die Recheneinrichtung zur Identifizierung der Benutzung gebührenpflichtiger Wegstrecken durch das Fahrzeug und zur Ermittlung der jeweiligen Nutzungsgebühr umfasst.

2. Einrichtung nach Anspruch 1,
**dadurch gekennzeichnet,**
**dass** die Recheneinrichtung auf der Chip-Karte (10) eine Selbstüberwachung auf unautorisierte Manipulation der Einrichtung ausführt.

3. Einrichtung nach Anspruch 1 oder 2,
**dadurch gekennzeichnet**,
ein weiterer Speicher (50) zur Speicherung diagnostizierter Daten im Falle einer unautorisierten Manipulation vorgesehen ist.

4. Einrichtung nach Anspruch 1, 2 oder 3,
**dadurch gekennzeichnet,**
**dass** die Mittel zur Positionsbestimmung des Fahrzeugs (30), der Speicher (40) und der weitere Speicher (50) im Fahrzeug außerhalb der Chip-Karte (10) realisiert sind und/oder die Mittel zur Positionsbestimmung (30) des Fahrzeugs, der Speicher (40) und der weitere Speicher (50) neben der Gebührenermittlung noch anderen Verwendungen unterliegen.

5. Einrichtung nach einem der vorhergehenden Ansprüche,
**dadurch gekennzeichnet,**
**dass** die in dem Speicher (40) gespeicherten Wegenetzdaten, die zugeordnete Gebührendaten umfassen, durch von einer Zentrale empfangene Daten aktualisiert werden können, wobei die von der Zentrale empfangenen Daten durch die Zentrale mit einer Signatur versehen sind.

6. Einrichtung nach Anspruch 5,
**dadurch gekennzeichnet,**
**dass** die Recheneinrichtung auf der Chip-Karte (10) die Signatur der von der Zentrale empfangenen und signierten Daten überprüft.

7. Einrichtung nach einem der vorhergehenden Ansprüche,
**dadurch gekennzeichnet,**
**dass** die Recheneinrichtung auf der Chip-Karte (10) die diagnostizierten Daten mit einer Signatur versieht und im weiteren Speicher (50) ablegt.

8. Einrichtung nach einem der vorhergehenden Ansprüche,
**dadurch gekennzeichnet,**
**dass** die Recheneinrichtung auf der Chip-Karte (10) die diagnostizierten Daten nummeriert und im weiteren Speicher (50) ablegt.

9. Einrichtung nach einem der vorhergehenden Ansprüche,
**dadurch gekennzeichnet,**
**dass** die Anfragen an die Recheneinrichtung auf der Chip-Karte (10) anhand von Zeitstempeln auf Plausibilität überprüft werden.

10. Einrichtung nach einem der vorhergehenden Ansprüche,
**dadurch gekennzeichnet,**
**dass** der Recheneinrichtung auf der Chip-Karte (10) die ermittelten Fahrzeugpositionen zur Verfügung gestellt werden, wobei die Recheneinrichtung auf der Chip-Karte (10) Fahrzeugpositionen auf Plausibilität überprüft.
